(19) **Europäisches Patentamt / European Patent Office / Office européen des brevets**

(11) **EP 0 891 037 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
*H02M 5/45* (2006.01)   *B60L 9/30* (2006.01)
*H02M 7/48* (2007.01)

(21) Anmeldenummer: **98111129.7**

(22) Anmeldetag: **17.06.1998**

(54) **Pulsweitenmodulationsverfahren für in Serie geschaltete Umrichter**

Pulse width modulation method for series connected converters

Méthode de modulation par largeur d'impulsion pour convertisseurs connectés en série

(84) Benannte Vertragsstaaten:
**AT DE FR GB NL**

(30) Priorität: **10.07.1997 DE 19729479**

(43) Veröffentlichungstag der Anmeldung:
**13.01.1999 Patentblatt 1999/02**

(73) Patentinhaber: **DaimlerChrysler AG**
**70567 Stuttgart (DE)**

(72) Erfinder:
• **Reinold, Harry, Dr.-Ing.**
**69115 Heidelberg (DE)**
• **Steiner, Michael, Dipl.-Ing.**
**68723 Schwetzingen (DE)**

(74) Vertreter: **Broydé, Marc**
**Breese Derambure Majerowicz**
**38 Avenue de l'Opéra**
**75002 Paris (FR)**

(56) Entgegenhaltungen:
**DE-A- 4 037 531      DE-A- 19 614 627**
**US-A- 5 142 468**

## Beschreibung

Die Erfindung bezieht sich auf ein Pulsweitenmodulationsverfahren für in Serie geschaltete Umrichter gemäß dem Oberbegriff des Anspruchs 1. Die Erfindung kann beispielsweise -jedoch nicht ausschließlich - für 2-Punkt- oder 3-Punkt-Umrichter bei Antriebssystemen für Schienenfahrzeuge verwendet werden.

Aus der DE 196 14 627 A1 ist ein Stromrichtersystem zur Speisung wenigstens eines Verbrauchers aus einem Hochspannungsnetz bekannt, wobei das Stromrichtersystem mehrere Teilstromrichtersysteme enthält und jedes Teilstromrichtersystem wenigstens einen Eingangsstromrichter, einen Spannungszwischenkreis und einen Wechselrichter enthält. Wesentliches Kennzeichen ist es, daß das Stromrichtersystem ohne Vor-, Zwischen- oder Nachschaltung eines Transformators realisiert ist, was zu einer Verringerung an Gewicht, Volumen und Kosten führt.

Bei Einsatz eines solchen Stromrichtersystems als Antriebssystem für Schienenfahrzeuge sind die im Fahrdraht auftretenden Stromoberschwingungen durch das verwendete Pulsdauermodulationsverfahren und die Haupteingangsdrossel bestimmt. Da die Antriebsleistungen der Antriebsmotoren unter anderem durch Schlupf-Regeleinrichtungen beeinflußt werden, kann nicht davon ausgegangen werden, daß die Antriebsleistungen der Antriebsmotoren unter allen Betriebsbedingungen gleich sind. Unterschiedliche Antriebsleistungen bedingen jedoch eine unterschiedliche Aussteuerung der verschiedenen Stromrichter (unterschiedliche Modulationsgrade), was die nachteilige Folge haben kann, daß erhöhte Netzrückwirkungen auftreten. Deshalb kommt dem eingesetzten Pulsdauermodulationsverfahren eine wesentliche Bedeutung bei der Minimierung der Oberwellenbelastung zu.

Der Erfindung liegt die Aufgabe zugrunde, ein sowohl für 2-Punkt-Umrichter als auch für 3-Punkt-Umrichter geeignetes Pulsdauermodulationsverfahren der eingangs genannten Art anzugeben, das bei in Serie geschalteten, mit unterschiedlichem Modulationsgrad betriebenen Umrichtern nur geringe Netzrückwirkungen verursacht.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die unter verschiedenen Betriebsbedingungen mit unterschiedlicher Aussteuerung (unterschiedlichen Modulationsgraden) der einzelnen, mit unterschiedlichen Lasten beschalteten Stromrichter produzierten Pulsmuster im Hinblick auf die auftretenden Oberschwingungen optimiert sind.

Ein aus drei in Serie geschalteten 3-Punkt-Umrichtern bestehendes Teilsystem erzeugt Oberschwingungen bei der 12-fachen Schaltfrequenz eines Halbleiters. Die Phasenlage dieser Oberschwingungen ist abhängig von der Aussteuerung. Bei einem aus zwei Teilsystemen mit unterschiedlicher Aussteuerung bestehenden Gesamtsystem kann es daher vorkommen, daß die Phasenlagen der ersten Oberschwingungen der Teilsysteme im schlimmsten Fall um 180° versetzt sind. Im Gesamtsystem tritt in diesem Fall die Oberschwingung mit der doppelten Amplitude - verglichen mit einem Teilsystem - auf. Bei der erfindungsgemäßen lückenlosen Verbindung der Pulse der beiden Teilsysteme wird die maximal auftretende Amplitude mit der 12-fachen Schaltfrequenz deutlich reduziert.

Durch die Verringerung der erzeugten Oberschwingungen kann die Haupteingangsdrossel verkleinert werden, was Kostenvorteile, Gewichtsersparnisse und Raumersparnisse zur Folge hat.

Wird das Pulsdauermodulationsverfahren bei einem Stromrichter eines Schienenfahrzeuges eingesetzt, werden vorteilhaft Signalanlagen und Gleisfreimeldeanlagen in direkter Nähe des Fahrdrahtes nicht in negativer Weise durch Oberschwingungen beeinflußt.

Die Erfindung wird nachstehend anhand der in der Zeichnung dargestellten Ausführungsbeispiele erläutert. Es zeigen:

Fig. 1       eine Anordnung mit mehreren wechselspannungsseitig in Serie geschalteten 3-Punkt-Umrichtern,

Fig. 2       den Aufbau eines einzelnen 2-Punkt-Umrichters,

Fig. 3       den Aufbau eines einzelnen 3-Punkt-Umrichters,

Fig. 4       die Pulsweitenmodulation bei einem 2-Punkt-Umrichter,

Fig. 5       die Pulsweitenmodulation bei einem 3-Punkt-Umrichter,

Fig. 6,7       die Bildung von Spannungspulsen, wobei ein Trägersignal verschoben wird,

Fig. 8       die Bildung von Spannungspulsen, wobei zwei Trägersignale verschoben werden.

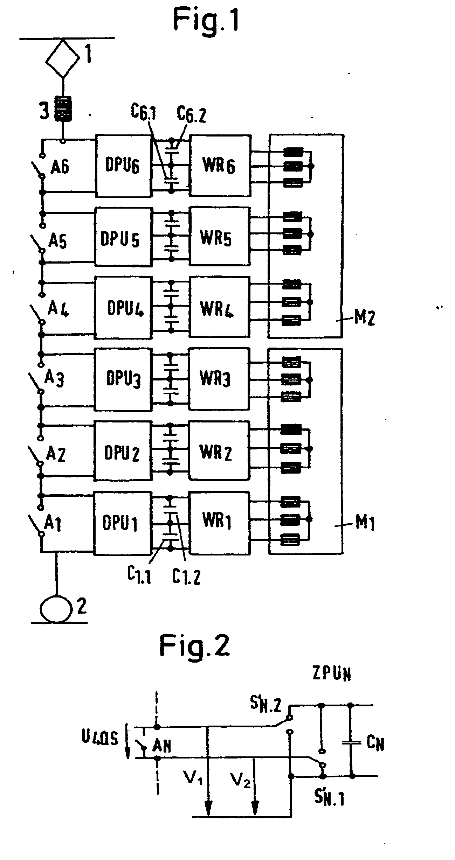

In Fig. 1 ist eine Anordnung mit mehreren wechselspannungsseitig in Serie geschalteten 3-Punkt-Umrichtern dargestellt. Zwischen einem Fahrdraht/Stromabnehmersystem 1 mit nachgeschalteter Haupteingangsdrossel 3 und einem Rad/Schiene-System 2 sind mehrere 3-Punkt-Umrichter $DPU_1$, $DPU_2$...$DPU_6$ in Serie geschaltet. Allgemein entspricht $DPU_N$ einem beliebigen der wechselspannungsseitig in Serie geschalteten 3-Punkt-Umrichter (N= 1, 2, 3, 4, 5, 6...). Jeder der 3-Punkt-Umrichter kann mittels eines Schalters $A_1$, $A_2$...$A_6$ (allgemein $A_N$) überbrückt werden.

Am Fahrdraht/Stromabnehmersystem 1 liegt eine Wechselspannung an, während das Rad/Schiene-System 2 auf Erdpotential liegt. Gleichspannungsseitig speist jeder 3-Punkt-Umrichter einen eigenen Zwischenkreis mit je zwei Zwischenkreiskondensatoren $C_{1.1}$, $C_{1.2}$, $C_{2.1}$, $C_{2.2}$,...$C_{6.1}$, $C_{6.2}$ (allgemein $C_{N.1}$, $C_{N.2}$). An jedem dieser Zwischenkreise liegt ein eigener Wechselrichter $WR_1$, $WR_2$...$WR_6$ (allgemein $WR_N$). Je drei Wechselrichter dienen zur Speisung eines 3-Stern-Motors, so daß ein erster 3-Stern-Motor $M_1$ an die drei Wechselrichter $WR_1$, $WR_2$, $WR_3$ und ein zweiter 3-Stern-Motor $M_2$ an die drei Wechselrichter $WR_4$, $WR_5$, $WR_6$ angeschlossen ist.

Bei der Schaltung gemäß Fig. 1 können an Stelle der sechs 3-Punkt-Umrichter $DPU_1$ bis $DPU_6$ auch zwölf 2-Punkt-Umrichter $ZPU_1$ bis $ZPU_{12}$ eingesetzt werden. Dabei werden die Zwischenkreiskondensatoren $C_{1.1}$, $C_{1.2}$...$C_{N.1}$, $C_{N.2}$ durch Zwischenkreiskondensatoren $C_1$...$C_N$ ersetzt. An jeden 2-Punkt-Umrichter ist ein Wechselrichter angeschlossen. Jeder dieser Wechselrichter speist über einen mit erhöhter Frequenz (beispielsweise 500 Hz) betriebenen Transformator einen Gleichrichter, wobei jeweils sechs Gleichrichter einen gemeinsamen Zwischenkreis speisen. An jeden dieser beiden Zwischenkreise ist eine Last (Motor) über einen Wechselrichter angeschlossen.

Fig. 2 zeigt den Aufbau eines einzelnen 2-Punkt-Umrichters $ZPU_N$. Jeder 2-Punkt-Umrichter weist zwei elektronische Schalter $S'_{N.1}$, $S'_{N.2}$ (jeder Schalter weist zwei Schaltstellungen auf und wird durch zwei Stromrichterventile realisiert) auf, mit deren Hilfe in allgemein bekannter Weise die beiden Anschlüsse des jedem 2-Punkt-Umrichter zugeordneten Zwischenkreiskondensators $C_N$ mit Spannung beaufschlagt werden können. Die Spannungspulse der elektronischen Schalter sind mit $V_1$, $V_2$ bezeichnet, des weiteren ist die Spannung $U_{4QS} = V_1 - V_2$ gezeigt.

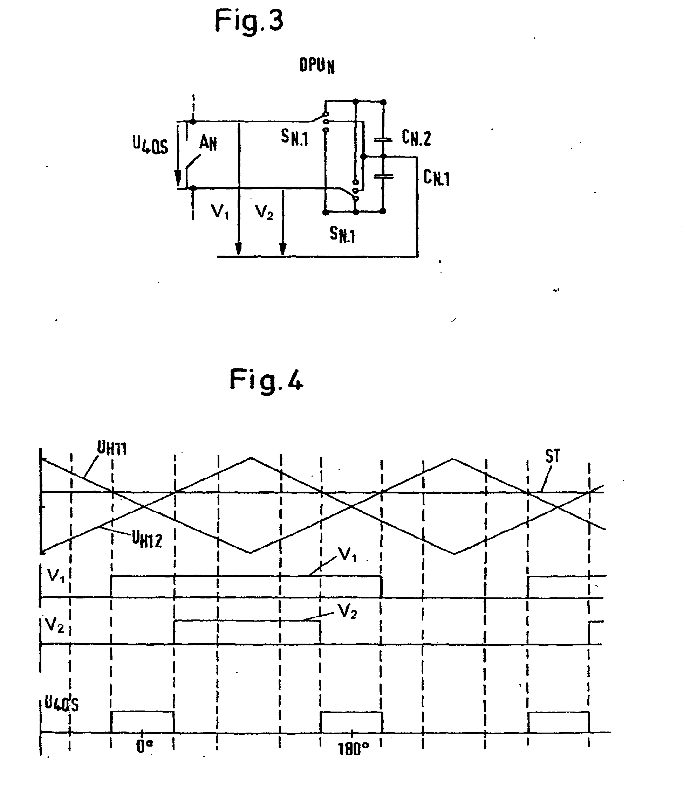

Fig. 3 zeigt den Aufbau eines einzelnen 3-Punkt-Umrichters. Jeder 3-Punkt-Umrichter $DPU_N$ weist zwei elektronische Schalter $S_{N.1}$, $S_{N.2}$ (jeder Schalter weist drei Schaltstellungen auf und wird durch vier Stromrichterventile realisiert) auf, mit deren Hilfe in allgemein bekannter Weise die beiden äußeren Anschlüsse bzw. der gemeinsame Anschluß der jedem 3-Punkt-Umrichter zugeordneten beiden in Reihe liegenden Zwischenkreiskondensatoren $C_{N.1}$, $C_{N.2}$ mit Spannung beaufschlagt werden können. Die Spannungspulse der elektronischen Schalter sind mit $V_1$, $V_2$ bezeichnet, des weiteren ist die Spannung $U_{4QS} = V_1 - V_2$ gezeigt.

Fig. 4 zeigt die bekannte Pulsweitenmodulation bei einem 2-Punkt-Umrichter. Es sind die Trägersignale $U_{H11}$, $U_{H12}$ für die beiden elektronischen Schalter skizziert. Durch Schnittpunktbildung der Trägersignale mit der entsprechend dem Modulationsgrad vorgegebenen Steuerspannung ST werden Beginn und Ende der Spannungspulse $V_1$, $V_2$ festgelegt.

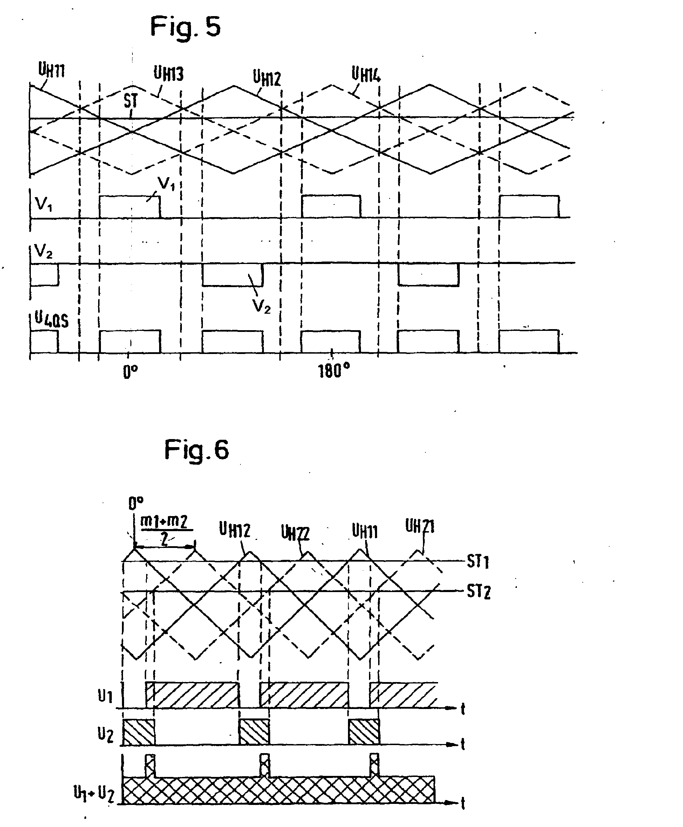

Fig. 5 zeigt die bekannte Pulsweitenmodulation bei einem 3-Punkt-Umrichter, die aus zwei versetzten Pulsweitenmodulationen des 2-Punkt-Umrichters gewonnen werden kann, denn aus der Sicht der Pulsweitenmodulation verhalten sich zwei in Serie geschaltete 2-Punkt-Umrichter bei entsprechendem Taktungsversatz wie ein 3-Punkt-Umrichter. Dementsprechend ergeben sich vier Trägersignale $U_{H11}$, $U_{H12}$, $U_{H13}$, $U_{H14}$ für die zwei elektronischen Schalter. Durch Schnittpunktbildung der Trägersignale mit der Steuerspannung ST werden Beginn und Ende der Spannungspulse $V_1$, $V_2$ festgelegt. Die fallenden und steigenden Flanken eines Pulses sind am selben Ort wie beim 2-Punkt-Umrichter, es treten jedoch doppelt so viele Pulse auf.

Die Pulsmuster der elektronischen Schalter werden vorzugsweise mittels des allgemein bekannten Unterschwingungsverfahrens realisiert, wobei versetzte Taktungen der einzelnen Umrichter erfolgen, um einen optimalen Betrieb der gesamten Anordnung unter Erzeugung möglichst geringer Oberschwingungen zu erzielen. Dabei wird davon ausgegangen, daß die drei den Motor $M_1$ speisenden Wechselrichter $WR_1$, $WR_2$, $WR_3$ bzw. die sechs 2-Punkt-Umrichter (erstes Teilsystem) jeweils mit einem gleichen Modulationsgrad $m_1$ und die drei den Motor $M_2$ speisenden Wechselrichter $WR_4$, $WR_5$, $WR_6$ bzw. die sechs 2-Punkt-Umrichter (zweites Teilsystem, beide Teilsysteme sind in Serie geschaltet und bilden das Gesamtsystem) jeweils mit einem gleichen Modulationsgrad $m_2$ betrieben werden. Die beiden Modulationsgrade können auf Grund unterschiedlicher Betriebsbedingungen der angeschlossenen Lasten unterschiedlich sein.

Ein Modulationsgrad von 1 entspricht einer motorischen Aussteuerung von 100% (Vollaussteuerung), ein Modulationsgrad von 0,5 entspricht einer motorischen Aussteuerung von 50%, ein Modulationsgrad von 0,1 entspricht einer motorischen Aussteuerung von 10%, ein Modulationsgrad von - 0,2 entspricht einer generatorischen Aussteuerung von 20% usw.

Die Aufgabe der nachfolgend erläuterten erfindungsgemäßen Pulsweitenmodulation besteht darin, zwei Pulse vom ersten und zweiten Teilsystem lückenlos miteinander zu verbinden. Die Pulsweitenmodulationen jedes Teilsystems arbeiten versetzt. Wie bereits bei den Betrachtungen zum 3-Punkt-Umrichter erläutert ist, bleibt bei diesem die steigende und fallende Flanke sowie die Pulsbreite erhalten, jedoch verdoppelt sich die Anzahl der Pulse pro Periode im Vergleich zum 2-Punkt-Umrichter. Aus diesem Grund beziehen sich die nachfolgenden Erläuterungen meist auf den Einsatz des Pulsweitenmodulation-Verfahrens beim 2-Punkt-Umrichter und können in einfacher Weise auf den 3-Punkt-Umrichter übertragen werden.

Fig. 6 zeigt die Bildung von Spannungspulsen mit erfindungsgemäßer Verschiebung des einen Trägersignals um einen Winkel $\alpha$. Es sind die zeitlichen Verläufe der dem 2-Punkt-Umrichter $DPU_1$ zugeordneten Trägersignale (Drei-

ecksignal, Hilfsspannung, Hilfssteuerspannung) $U_{H11}$, $U_{H12}$ (durchgezogener Linienzug) sowie die zeitlichen Verläufe der dem 2-Punkt-Umricher $DPU_4$ zugeordneten Trägersignale $U_{H21}$, $U_{H22}$ (gestrichelter Linienzug) zu erkennen. Die Trägersignale $U_{H11}$, $U_{H12}$ sind um 180° gegeneinander versetzt, desgleichen die Trägersignale $U_{H21}$, $U_{H22}$. Die Trägersignale $U_{H11}$, $U_{H12}$ werden mit einer dem Modulationsgrad $m_1$ entsprechenden Steuerspannung $ST_1$ (durchgezogener Linienzug) geschnitten, wobei die Schnittpunkte Beginn und Ende der vom 2-Punkt-Umricher $DPU_1$ produzierten Spannungspulse $U_1=U_{4QS1}$ festlegen. Desgleichen werden die Trägersignale $U_{H21}$, $U_{H22}$ mit einer dem Modulationsgrad $m_2$ entsprechenden Steuerspannung $ST_2$ (gestrichelter Linienzug) geschnitten, wobei die Schnittpunkte Beginn und Ende der vom 2-Punkt-Umricher $DPU_4$ produzierten Spannungspulse $U_2=U_{4QS2}$ festlegen. Die Modulationsgrade $m_1$ und $m_2$ sind nicht gleich, d. h. die Motoren $M_1$ und $M_2$ werden mit unterschiedlichen Leistungen betrieben.

Erfindungsgemäß werden die Trägersignale $U_{H21}$ und $U_{H22}$ für die Umrichter des zweiten Teilsystems gegenüber den unverändert bleibenden Trägersignalen $U_{H11}$ und $U_{H12}$ für die Umrichter des ersten Teilsystems um den Winkel $\alpha$ verschoben, wobei (sowohl für 2-Punkt- als auch für 3-Punkt-Umrichter) gilt:

$$\alpha = \pm \frac{|m_1 + m_2|}{2} \cdot 180°.$$

Beim Verschieben der Trägersignale bleiben die Trägersignale $U_{H11}$ und $U_{H12}$ demnach unverändert (siehe die 0°-Markierung), während die Trägersignale $U_{H21}$ und $U_{H22}$ derart um den Winkel $\alpha$ verschoben werden, daß das Ende des Spannungspulses $U_1$ mit dem Anfang des Spannungspulses $U_2$ zusammenfällt, d. h. es tritt keine Lücke zwischen den Spannungspulsen auf. Damit wird zwei Pulsmustern ein Verhalten gegeben, wie es einem Pulsmuster entspricht - mit dem Ergebnis der vorteilhaften Oberschwingungs-Reduzierung. Die resultierende Summe der Spannungspulse (Summenspannung) $U_1 + U_2$ ist ebenfalls dargestellt.

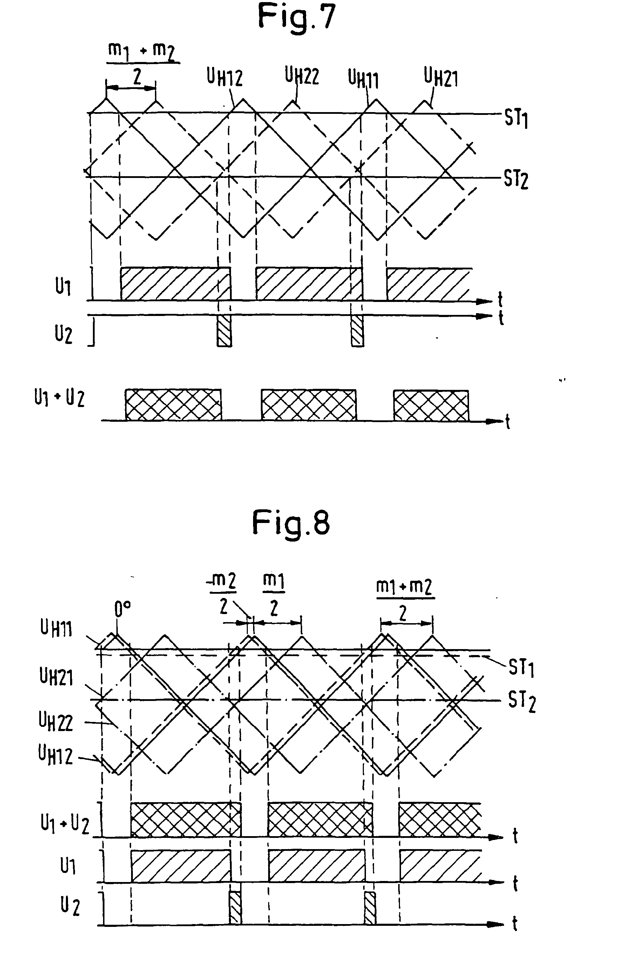

In dynamischen Fällen kann es vorkommen, daß momentan ein Modulationsgrad negativ (generatorische Aussteuerung) und der andere Modulationsgrad positiv (motorische Aussteuerung) ist. Auch in diesem Fall ergibt sich eine günstige Verschiebung der Pulse nach obiger Formel für den Winkel $\alpha$, da der negative Puls in diesem Fall in den positiven Puls fällt. In Fig. 7 ist das entsprechende Ausführungsbeispiel dargestellt. Wie zu erkennen ist, fallen aufgrund der Verschiebung der Trägersignale mit dem Winkel $\alpha$ das Ende des Spannungspulses $U_1$ und das Ende des Spannungspulses $U_2$ zusammen.

Für den 2-Punkt-Umrichter ergibt sich (Laufindex x = 1, 2, 3... 12):

| x | ZPU | $U_{Hx1}$ | $U_{Hx2}$ |
|---|---|---|---|
| x=1 | $ZPU_1$ | 0° | 180° |
| x=2 | $ZPU_2$ | 90° | 270° |
| x=3 | $ZPU_3$ | 30° | 210° |
| x=4 | $ZPU_4$ | 120° | 300° |
| x=5 | $ZPU_5$ | 60° | 240° |
| x=6 | $ZPU_6$ | 150° | 330° |
| x=7 | $ZPU_7$ | $\alpha$+0° | $\alpha$+180° |
| x=8 | $ZPU_8$ | $\alpha$+90° | $\alpha$+270° |
| x=9 | $ZPU_9$ | $\alpha$+30° | $\alpha$+210° |
| x=10 | $ZPU_{10}$ | $\alpha$+120° | $\alpha$+300° |
| x=11 | $ZPU_{11}$ | $\alpha$+60° | $\alpha$+240° |
| x=12 | $ZP_{12}$ | $\alpha$+150° | $\alpha$+330° |

Für den 3-Punkt-Umrichter ergibt sich (Laufindex x = 1, 2, 3...6):

| x | DPU | $U_{HX1}$ | $U_{Hx2}$ | $U_{Hx3}$ | $U_{hx4}$ |
|---|---|---|---|---|---|
| x=1 | $DPU_1$ | 0° | 180° | 90° | 270° |
| x=2 | $DPU_2$ | 30° | 210° | 120° | 300° |
| x=3 | $DPU_3$ | 60° | 240° | 150° | 330° |
| x=4 | $DPU_4$ | $\alpha$+0° | $\alpha$+180° | $\alpha$+90° | $\alpha$+270° |
| x=5 | $DPU_5$ | $\alpha$+30° | $\alpha$+210° | $\alpha$+120° | $\alpha$+300° |
| x=6 | $DPU_6$ | $\alpha$+60° | $\alpha$+240° | $\alpha$+150° | $\alpha$+330° |

Fig. 8 zeigt die Bildung von Spannungspulsen mit Verschiebung von zwei Trägersignalen. Erfindungsgemäß werden bei dieser Variante die Trägersignale $U_{H21}$ und $U_{H22}$ (siehe strichpunktierter Linienzug) für die Umrichter des zweiten Teilsystems um den Winkel $\alpha_1$ und die Trägersignale $U_{H11}$ und $U_{H12}$ (siehe gestrichelter Linienzug) für die Umrichter des ersten Teilsystems um den Winkel $\alpha_0$ verschoben. Dies hat den Vorteil, daß die resultierenden Pulse symmetrisch zueinander sind. Es gilt (sowohl für 2-Punkt- als auch für 3-Punkt-Umrichter):

$$\alpha_0 = -sign(m_1 + m_2) \cdot \frac{m_2}{2} \cdot 180° \quad \text{oder} \quad \alpha_0 = -sign(m_1 + m_2) \cdot \frac{m_1}{2} \cdot 180°$$

$$\alpha_1 = \alpha_0 + \frac{|m_1 + m_2|}{2} \cdot 180°$$

oder gemäß einer Variante

$$\alpha_0 = +sign(m_1 + m_2) \cdot \frac{m_2}{2} \cdot 180° \quad \text{oder} \quad \alpha_0 = +sign(m_1 + m_2) \cdot \frac{m_1}{2} \cdot 180°$$

$$\alpha_1 = \alpha_0 - \frac{|m_1 + m_2|}{2} \cdot 180° .$$

Auch etwas geänderte Formeln liefern gute Ergebnisse, beispielsweise gemäß einer ersten Variante:

$$\alpha_0 = -\frac{|m_2|}{2} \cdot 180° ,$$

$$\alpha_1 = \frac{|m_1|}{2} \cdot 180° ,$$

oder gemäß einer zweiten Variante:

$$\alpha_0 = \frac{|m_2|}{2} \cdot 180° ,$$

$$\alpha_1 = -\frac{|m_1|}{2} \cdot 180°,$$

oder gemäß einer dritten Variante:

$$\alpha_0 = \frac{m_2}{2} \cdot 180°,$$

$$\alpha_1 = \alpha_0 + \frac{|m_1 + m_2|}{2} \cdot 180°,$$

oder gemäß einer vierten Variante:

$$\alpha_0 = -\frac{|m_2|}{2} \cdot 180°,$$

$$\alpha_1 = \alpha_0 + \frac{|m_1 + m_2|}{2} \cdot 180°,$$

oder gemäß einer fünften Variante:

$$\alpha_0 = \frac{|m_2|}{2} \cdot 180°,$$

$$\alpha_1 = \alpha_0 - \frac{|m_1 + m_2|}{2} \cdot 180°$$

Bei reduzierten Anforderungen sind weitere vereinfachte Formeln anwendbar.

Zur Definition der Verschiebungen bzw. der Winkel ist das die 0°-Markierung durchlaufende, jedoch bei dieser Variante nicht verwendete Trägersignal in Fig. 5 zusätzlich eingezeichnet (siehe durchgezogener Linienzug). Die den Modulationsgraden $m_1$ und $m_2$ entsprechenden Steuerspannungen $ST_1$ (siehe gestrichelter Linienzug) und $ST_2$ (siehe strichpunktierter Linienzug) sind ebenfalls dargestellt.

Für den 2-Punkt-Umrichter ergibt sich:

| $x$ | ZPU | $U_{Hx1}$ | $U_{Hx2}$ |
|-----|-----|-----------|-----------|
| $x=1$ | $ZPU_1$ | $\alpha_0 + 0°$ | $\alpha_0 + 180°$ |
| $x=2$ | $ZPU_2$ | $\alpha_0 + 90°$ | $\alpha_0 + 270°$ |
| $x=3$ | $ZPU_3$ | $\alpha_0 + 30°$ | $\alpha_0 + 210°$ |

(fortgesetzt)

| $x$ | ZPU | $U_{Hx1}$ | $U_{Hx2}$ |
|---|---|---|---|
| $x=4$ | $ZPU_4$ | $\alpha_0+120°$ | $\alpha_0+300°$ |
| $x=5$ | $ZPU_5$ | $\alpha_0+60°$ | $\alpha_0+240°$ |
| $x=6$ | $ZPU_6$ | $\alpha_0+150°$ | $\alpha_0+330°$ |
| $x=7$ | $ZPU_7$ | $\alpha_1+0°$ | $\alpha_1+180°$ |
| $x=8$ | $ZPU_8$ | $\alpha_1+90°$ | $\alpha_1+270°$ |
| $x=9$ | $ZPU_9$ | $\alpha_1+30°$ | $\alpha_1+210°$ |
| $x=10$ | $ZPU_{10}$ | $\alpha_1+120°$ | $\alpha_1+300°$ |
| $x=11$ | $ZPU_{11}$ | $\alpha_1+60°$ | $\alpha_1+240°$ |
| $x=12$ | $ZPU_{12}$ | $\alpha_1+150°$ | $\alpha_1+330°$ |

Für den 3-Punkt-Umrichter ergibt sich:

| $x$ | DPU | $U_{Hx1}$ | $U_{Hx2}$ | $U_{Hx3}$ | $U_{Hx4}$ |
|---|---|---|---|---|---|
| $x=1$ | $DPU_1$ | $\alpha_0+0°$ | $\alpha_0+180°$ | $\alpha_0+90°$ | $\alpha_0+270°$ |
| $x=2$ | $DPU_2$ | $\alpha_0+30°$ | $\alpha_0+210°$ | $\alpha_0+120°$ | $\alpha_0+300°$ |
| $x=3$ | $DPU_3$ | $\alpha_0+60°$ | $\alpha_0+240°$ | $\alpha_0+150°$ | $\alpha_0+330°$ |
| $x=4$ | $DPU_4$ | $\alpha_1+0°$ | $\alpha_1+180°$ | $\alpha_1+90°$ | $\alpha_1+270°$ |
| $x=5$ | $DPU_5$ | $\alpha_1+30°$ | $\alpha_1+210°$ | $\alpha_1+120°$ | $\alpha_1+300°$ |
| $x=6$ | $DPU_6$ | $\alpha_1+60°$ | $\alpha_1+240°$ | $\alpha_1+150°$ | $\alpha_1+330°$ |

Beide Alternativen gemäß Fig. 6/7 und Fig. 8 sind bezüglich der Reduzierung von Oberschwingungen gleichwertig.

Abschließend soll noch erwähnt werden, daß der optimale Winkelversatz der Trägersignale bei in Serie geschalteten 2-Punkt-Umrichtern mit ungefähr gleichen Modulationsgraden in der Patenanmeldung 19 651 825 behandelt ist.

**Patentansprüche**

1.  Pulsweitenmodulationsverfahren für wechselspannungsseitig in Serie geschaltete 2-Punkt-Umrichter ($ZPU_1$-$ZPU_{12}$) oder 3-Punkt-Umrichter ($DPU_1$-$DPU_6$), wobei durch eine erste Pulsweitenmodulation entsprechend einem ersten Modulationsgrad ($m_1$) an einem ersten Umrichter wechselspannungsseitig Spannungspulse ($U_1$) und durch eine zweite Pulsweitenmodulation entsprechend einem zweiten Modulationsgrad ($m_2$) an einem zweiten Umrichter wechselspannungsseitig Spannungspulse ($U_2$) erzeugt werden, **dadurch gekennzeichnet, dass** die Spannungspulse des ersten Umrichters und des zweiten Umrichters von den jeweiligen Pulsweitenmodulationen derart erzeugt werden, dass bei deren Zusammenfassung durch die Serienschaltung der Umrichter ein gemeinsamer, lückenloser zusammengefasster Spannungspuls ($U_1+U_2$) entsteht, wobei Beginn und Ende der Spannungspulse von den Pulsweitenmodulationen durch Schnittpunktbildung von Trägersignalen ($U_{H11}$, $U_{H12}$, $U_{H21}$, $U_{H22}$) mit jeweils einer entsprechend dem jeweiligen Modulationsgrad vorgegebenen Steuerspannung ($ST_1$, $ST_2$) festgelegt werden und wobei die Pulsweitenmodulationen durch ein Unterschwingungsverfahren erzeugt werden und die Trägersignale des ersten Umrichters gegenüber den unverändert bleibenden Trägersignalen des zweiten Umrichters um den Winkel $\alpha$ verschoben werden, wobei gilt:

$$\alpha = \pm \frac{|m_1 + m_2|}{2} \bullet 180°.$$

2.  Pulsweitenmodulationsverfahren nach Anspruch 1, wobei die zusammengefassten Spannungspulse ($U_1+U_2$) jeweils symmetrisch zu den vorhergehenden und nachfolgenden zusammengefassten Spannungspulsen liegen und wobei die Trägersignale des ersten Umrichters gegenüber einer 0°-Markierung um den Winkel $\alpha_1$ und die Trägersignale des zweiten Umrichters gegenüber der 0°-Markierung um den Winkel $\alpha_0$ verschoben werden, wobei gilt:

$$\alpha_0 = -sign(m_1 + m_2) \cdot \frac{m_2}{2} \cdot 180° \text{ oder } \alpha_0 = -sign(m_1 + m_2) \cdot \frac{m_1}{2} \cdot 180°$$

$$\alpha_1 = \alpha_0 + \frac{|m_1 + m_2|}{2} \cdot 180°.$$

3. Pulsweitenmodulationsverfahren nach Anspruch 1, wobei die zusammengefassten Spannungspulse ($U_1$+$U_2$) jeweils symmetrisch zu den vorhergehenden und nachfolgenden zusammengefassten Spannungspulsen liegen und wobei die Trägersignale des ersten Umrichters gegenüber einer 0°-Markierung um den Winkel $\alpha_1$ und die Trägersignale des zweiten Umrichters gegenüber der 0°-Markierung um den Winkel $\alpha_0$ verschoben werden, wobei gilt:

$$\alpha_0 = +sign(m_1 + m_2) \cdot \frac{m_2}{2} \cdot 180° \text{ oder } \alpha_0 = +sign(m_1 + m_2) \cdot \frac{m_1}{2} \cdot 180°$$

$$\alpha_1 = \alpha_0 - \frac{|m_1 + m_2|}{2} \cdot 180°$$

4. Pulsweitenmodulationsverfahren nach Anspruch 1, wobei die zusammengefassten Spannungspulse ($U_1$+$U_2$) jeweils symmetrisch zu den vorhergehenden und nachfolgenden zusammengefassten Spannungspulsen liegen und wobei die Trägersignale des ersten Umrichters gegenüber einer 0°-Markierung um den Winkel $\alpha_1$ und die Trägersignale des zweiten Umrichters gegenüber der 0°-Markierung um den Winkel $\alpha_0$ verschoben werden, wobei gilt:

$$\alpha_0 = -\frac{|m_2|}{2} \cdot 180°,$$

$$\alpha_1 = \frac{|m_1|}{2} \cdot 180°.$$

5. Pulsweitenmodulationsverfahren nach Anspruch 1, wobei die zusammengefassten Spannungspulse ($U_1$+$U_2$) jeweils symmetrisch zu den vorhergehenden und nachfolgenden zusammengefassten Spannungspulsen liegen und wobei die Trägersignale des ersten Umrichters gegenüber einer 0°-Markierung um den Winkel $\alpha_1$ und die Trägersignale des zweiten Umrichters gegenüber der 0°-Markierung um den Winkel $\alpha_0$ verschoben werden, wobei gilt:

$$\alpha_0 = \frac{|m_2|}{2} \cdot 180°,$$

$$\alpha_1 = -\frac{|m_1|}{2} \cdot 180°.$$

6. Pulsweitenmodulationsverfahren nach Anspruch 1, wobei die zusammengefassten Spannungspulse ($U_1$+$U_2$) jeweils

symmetrisch zu den vorhergehenden und nachfolgenden zusammengefassten Spannungspulsen liegen und wobei die Trägersignale des ersten Umrichters gegenüber einer 0°-Markierung um den Winkel $\alpha_1$ und die Trägersignale des zweiten Umrichters gegenüber der 0°-markierung um den Winkel $\alpha_0$ verschoben werden, wobei gilt:

$$\alpha_0 = \frac{|m_2|}{2} \bullet 180°,$$

$$\alpha_1 = \alpha_0 + \frac{|m_1 + m_2|}{2} \bullet 180°.$$

7. Pulsweitenmodulationsverfahren nach Anspruch 1, wobei die zusammengefassten Spannungspulse ($U_1+U_2$) jeweils symmetrisch zu den vorhergehenden und nachfolgenden zusammengefassten Spannungspulsen liegen und wobei die Trägersignale des ersten Umrichters gegenüber einer 0°-markierung um den Winkel $\alpha_1$ und die Trägersignale des zweiten Umrichters gegenüber der 0°-Markierung um den Winkel $\alpha_0$ verschoben werden, wobei gilt:

$$\alpha_0 = -\frac{|m_2|}{2} \bullet 180°,$$

$$\alpha_1 = \alpha_0 + \frac{|m_1 + m_2|}{2} \bullet 180°.$$

8. Pulsweitenmodulationsverfahren nach Anspruch 1, wobei die zusammengefassten Spannungspulse ($U_1+U_2$) jeweils symmetrisch zu den vorhergehenden und nachfolgenden zusammengefassten Spannungspulsen liegen und wobei die Trägersignale des ersten Umrichters gegenüber einer 0°-Markierung um den Winkel $\alpha_1$ und die Trägersignale des zweiten Umrichters gegenüber der 0°-Markierung um den Winkel $\alpha_0$ verschoben werden, wobei gilt:

$$\alpha_0 = \frac{|m_2|}{2} \bullet 180°,$$

$$\alpha_1 = \alpha_0 - \frac{|m_1 + m_2|}{2} \bullet 180°.$$

9. Pulsweitenmodulationsverfahren nach einem der Ansprüche 1 bis 8, wobei die Trägersignale Dreieckssignale sind.

**Claims**

1. Pulse width modulation method for 2-point converters ($ZPU_1$-$ZPU_{12}$) or 3-point converters ($DP_1$,-$DPU_6$) connected in series on the AC voltage side, wherein voltage pulses ($U_1$) are generated on the AC voltage side at a first converter by a first pulse width modulation according to a first degree of modulation ($m_1$) and voltage pulses ($U_2$) are generated on the AC voltage side at a second converter by a second pulse width modulation according to a second degree of modulation ($m_2$), **characterised in that** the voltage pulses of the first converter and of the second converter are generated by the respective pulse width modulations in such a way that, when they are combined by the series connection of the converters, a common, gap-free, combined voltage pulse ($U_1+U_2$) is produced, wherein the start and end of the voltage pulses are defined by the pulse width modulations by forming a point of intersection of carrier signals ($U_{H11}$, $U_{H12}$, $U_{H21}$, $U_{H22}$) each having a control voltage ($ST_1$, $ST_2$) predefined according to the respective degree of modulation, and wherein the pulse width modulations are generated by an undershoot method and the carrier signals of the first converter are shifted by the angle $\alpha$ with respect to the unchanged carrier signals of the second converter, wherein:

$$\alpha = \pm \frac{\left| m_1 + m_2 \right|}{2} * 180.$$

2. Pulse width modulation method according to Claim 1, wherein the combined voltage pulses ($U_1+U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = -sign(m_1 + m_2) * \frac{m_2}{2} * 180 \quad \text{or} \quad \alpha_0 = -sign(m_1 + m_2) * \frac{m_1}{2} * 180$$

$$\alpha_1 = \alpha_0 + \frac{\left| m_1 + m_2 \right|}{2} * 180.$$

3. Pulse width modulation method according to Claim 1, wherein the combined voltage pulses ($U_1+U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = +sign(m_1 + m_2) * \frac{m_2}{2} * 180 \quad \text{or} \quad \alpha_0 = +sign(m_1 + m_2) * \frac{m_1}{2} * 180$$

$$\alpha_1 = \alpha_0 - \frac{\left| m_1 + m_2 \right|}{2} * 180.$$

4. Pulse width modulation method according to Claim 1, wherein the combined voltage pulses ($U_1+U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = -\frac{\left| m_2 \right|}{2} * 180,$$

$$\alpha_1 = \frac{|m_1|}{2} * 180 .$$

5. Pulse width modulation method according to Claim 1, wherein the combined voltage pulses ($U_1$+$U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = \frac{|m_2|}{2} * 180 ,$$

$$\alpha_1 = -\frac{|m_1|}{2} * 180 .$$

6. Pulse width modulation method according to Claim 1, wherein the combined voltage pulses ($U_1$+$U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = \frac{|m_2|}{2} * 180 ,$$

$$\alpha_1 = \alpha_0 + \frac{|m_1 + m_2|}{2} * 180 .$$

7. Pulse width modulation method according to Claim 1, wherein the combined voltage pulses ($U_1$+$U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = -\frac{|m_2|}{2} * 180 ,$$

$$\alpha_1 = \alpha_0 + \frac{|m_1 + m_2|}{2} * 180 .$$

8. Pulse width modulation method according to Claim 1, wherein the combined voltage pulses ($U_1$+$U_2$) are in each case symmetrical to the previous and subsequent combined voltage pulses and wherein the carrier signals of the first converter are shifted by the angle $\alpha_1$ with respect to a 0° marking and the carrier signals of the second converter are shifted by the angle $\alpha_0$ with respect to the 0° marking, wherein:

$$\alpha_0 = \frac{|m_2|}{2} * 180,$$

$$\alpha_1 = \alpha_0 - \frac{|m_1 + m_2|}{2} * 180.$$

**9.** Pulse width modulation method according to one of Claims 1 to 8, wherein the carrier signals are triangular signals.

**Revendications**

**1.** Procédé de modulation de largeur d'impulsion pour des convertisseurs à 2 points ($ZPU_1$ à $ZPU_{12}$) ou convertisseurs à 3 points ($DPU_1$ à $DPU_6$) montés en série du côté de la tension alternative, moyennant quoi, grâce à la première modulation de largeur d'impulsion, en fonction d'un premier degré de modulation ($m_1$), au niveau d'un premier convertisseur, on obtient des impulsions de tension ($U_1$) du côté tension alternative, et par une deuxième modulation de largeur d'impulsion, en fonction du deuxième degré de modulation ($m_2$), au niveau d'un deuxième modulateur, on obtient des impulsions de tension ($U_2$), du côté tension alternative, **caractérisé en ce que** les impulsions de tension du premier convertisseur et du deuxième convertisseur sont produites par les modulations de largeur d'impulsion respectives de telle sorte que, lors de leur combinaison du fait du montage en série des convertisseurs, il apparaît une impulsion de tension combinée, commune, sans interstice ($U_1 + U_2$), moyennant quoi le début et la fin des impulsions de tension sont déterminés à partir des modulations de largeur d'impulsion en formant un point d'intersection entre les signaux porteurs ($U_{H11}$, $U_{H12}$, $U_{H21}$, $U_{H22}$) présentant respectivement une tension de commande ($ST_1$, $ST_2$) prédéfinie en fonction du degré de modulation respectif, moyennant quoi les modulations de largeur d'impulsion sont produites par un procédé de sous-oscillation, et les signaux porteurs du premier convertisseur sont décalés par rapport aux signaux porteurs, restant inchangés, du deuxième convertisseur selon l'angle $\propto$, en utilisant la formule :

$$\alpha = \pm \frac{|m_1 + m_2|}{2} * 180.$$

**2.** Procédé de modulation de largeur d'impulsion selon la revendication 1, dans lequel les impulsions de tension combinées ($U_1 + U_2$) sont respectivement symétriques par rapport aux impulsions de tension combinées précédentes et suivantes, et dans lequel les signaux porteurs du premier convertisseur sont décalés selon l'angle $\alpha_1$ par rapport à un repère correspondant à l'angle 0°, et les signaux porteurs du deuxième convertisseur sont décalés selon l'angle $\alpha_0$ par rapport au repère correspondant à l'angle 0°, moyennant quoi on utilise les formules :

$$\alpha_0 = -sign(m_1 + m_2) * \frac{m_2}{2} * 180 \quad ou \quad \alpha_0 = -sign(m_1 + m_2) * \frac{m_1}{2} * 180$$

$$\alpha_1 = \alpha_0 + \frac{|m_1 + m_2|}{2} * 180.$$

**3.** Procédé de modulation de largeur d'impulsion selon la revendication 1, dans lequel les impulsions de tension combinées ($U_1 + U_2$) sont respectivement symétriques par rapport aux impulsions de tension combinées précédentes et suivantes, et dans lequel les signaux porteurs du premier convertisseur sont décalés selon l'angle $\propto_1$ par rapport

au repère correspondant à l'angle 0°, et les signaux porteurs du deuxième convertisseur sont décalés selon l'angle $\propto_0$ par rapport au repère correspondant à l'angle 0°, moyennant quoi on utilise les formules :

$$\alpha_0 = +sign(m_1 + m_2) * \frac{m_2}{2} * 180 \quad \text{ou} \quad \alpha_0 = +sign(m_1 + m_2) * \frac{m_1}{2} * 180$$

$$\alpha_1 = \alpha_0 - \frac{|m_1 + m_2|}{2} * 180.$$

**4.** Procédé de modulation de largeur d'impulsion selon la revendication 1, dans lequel les impulsions de tension combinées $(U_1 + U_2)$ sont respectivement symétriques par rapport aux impulsions de tension combinées précédentes et suivantes, et dans lequel les signaux porteurs du premier convertisseur sont décalés selon l'angle $\alpha_1$ par rapport au repère correspondant à l'angle 0° et les signaux porteurs du deuxième convertisseur sont décalés selon l'angle $\alpha_0$ par rapport au repère correspondant à l'angle 0°, moyennant quoi on utilise les formules :

$$\alpha_0 = -\frac{|m_2|}{2} * 180,$$

$$\alpha_1 = \frac{|m_1|}{2} * 180.$$

**5.** Procédé de modulation de largeur d'impulsion selon la revendication 1, dans lequel les impulsions de tension combinées $(U_1 + U_2)$ sont respectivement symétriques par rapport aux impulsions de tension combinées précédentes et suivantes, et dans lequel les signaux porteurs du premier convertisseur sont décalés selon l'angle $\alpha_1$ par rapport au repère correspondant à l'angle 0°, et les signaux porteurs du deuxième convertisseur sont décalés selon l'angle $\alpha_0$ par rapport au repère correspondant à l'angle 0°, moyennant quoi on utilise les formules:

$$\alpha_0 = \frac{|m_2|}{2} * 180,$$

$$\alpha_1 = -\frac{|m_1|}{2} * 180.$$

**6.** Procédé de modulation de largeur d'impulsion selon la revendication 1, dans lequel les impulsions de tension combinées $(U_1 + U_2)$ sont respectivement symétriques par rapport aux impulsions de tension combinées précédentes et suivantes, et dans lequel les signaux porteurs du premier convertisseur sont décalés selon l'angle $\alpha_1$ par rapport au repère correspondant à l'angle 0°, et les signaux porteurs du deuxième convertisseur sont décalés selon l'angle $\propto_0$ par rapport au repère correspondant à l'angle 0°, moyennant quoi on utilise les formules :

$$\alpha_0 = \frac{|m_2|}{2} * 180,$$

$$\alpha_1 = \alpha_0 + \frac{|m_1 + m_2|}{2} * 180$$

**7.** Procédé de modulation de largeur d'impulsion selon la revendication 1, dans lequel les impulsions de tension combinées ($U_1 + U_2$) sont respectivement symétriques par rapport aux impulsions de tension combinées précédentes et suivantes, et dans lequel les signaux porteurs du premier convertisseur sont décalés selon l'angle $\alpha_1$ par rapport au repère correspondant à l'angle 0°, et les signaux porteurs du deuxième convertisseur sont décalés selon l'angle $\alpha_0$ par rapport au repère correspondant à l'angle 0°, moyennant quoi on utilise les formules :

$$\alpha_0 = -\frac{|m_2|}{2} * 180,$$

$$\alpha_1 = \alpha_0 + \frac{|m_1 + m_2|}{2} * 180$$

**8.** Procédé de modulation de largeur d'impulsion selon la revendication 1, dans lequel les impulsions de tension combinées ($U_1 + U_2$) sont respectivement symétriques par rapport aux impulsions de tension combinées précédentes et suivantes, et dans lequel les signaux porteurs du premier convertisseur sont décalés selon l'angle $\alpha_1$ par rapport au repère correspondant à l'angle 0°, et les signaux porteurs du deuxième convertisseur sont décalés selon l'angle $\alpha_0$ par rapport au repère correspondant à l'angle 0°, moyennant quoi on utilise les formules :

$$\alpha_0 = \frac{|m_2|}{2} * 180,$$

$$\alpha_1 = \alpha_0 - \frac{|m_1 + m_2|}{2} * 180.$$

**9.** Procédé de modulation de largeur d'impulsion selon l'une quelconque des revendications 1 à 8, dans lequel les signaux porteurs sont des signaux triangulaires.

# Fig.1

# Fig.2

# Fig.3

# Fig.4

## Fig. 5

## Fig. 6

# Fig.7

# Fig.8